# EUROPEAN PATENT APPLICATION

(11) **EP 4 059 651 A1**
(43) Date of publication of application: **21.09.2022**
(21) Application number: 22162350.7
(22) Date of filing: 15.03.2022
(51) Int. Cl.: B23K 9/095, B23K 9/10, G05B 19/42

(54) **TETHERED COLLABORATIVE ROBOT WITH SMART TORCH**

(30) Priority: 18.03.2021 US 202163162639 P; 18.10.2021 US 202117503437
(71) Applicant: Lincoln Global, Inc., Santa Fe Springs, CA 90670 (US)
(72) Inventor: VIDAKOVIC, Bojan, Broadview Heights 44147 (US); BRANT, Michael, Richmond Heights 44143 (US); OSICKI, David E., Painesville 44077 (US); WHAN, Michael L., Hiram 44234 (US); GRIFFITH, Peter T., Fairview Park 44126 (US)
(74) Representative: Hoyng Rokh Monegier B.V.

(57) **Abstract**

A torch (220) for use by a robot. The torch has a body (226) that can be connected to an arm of the robot. A first actuator (222) on the body can be activated by a user to initiate a recording cycle at a starting point of a desired welding or cutting path and to terminate the recording cycle at an ending point of the path. A second actuator (224) on the body can be activated by the user to indicate way points (227, 228, 229) from the starting point (227) to the ending point (229) as the user moves the torch along the path. The first actuator sends first information to a robot controller, operatively connected to and located remotely from the robot, to initiate and to terminate the recording cycle at the controller. The second actuator device sends the way points as second information to the controller to be recorded at the controller during the recording cycle.

## Description

### CROSS REFERENCE TO RELATED APPLICATION/INCORPORATION BY REFERENCE

The present application claims priority to and the benefit of U.S. provisional patent application serial number 63/162,639 filed on March 18, 2021, which is incorporated herein by reference in its entirety.

### FIELD

Embodiments of the present invention relate to the use of collaborative robots (cobots) for welding or cutting. More specifically, embodiments of the present invention relate to systems and methods for using cobots in an unconventional manner with a "smart" welding or cutting torch.

### BACKGROUND

Remote welding (e.g., in confined compartments in shipyards) has not typically been available using robots. Robots were not collaborative and were tied to porch equipment due to size and weight. Furthermore, programming a robot to operate in a confined remote environment has proven to be difficult. Current designs of robots require an operator to hold a dead-man switch on a tablet teach pendant. To record weld points along a welding path and to start the arc, the teach pendant must be used. Holding a dead-man switch on a teach pendant can be very inconvenient and prevent the operator from being able to use both hands while programming a weld path.

### SUMMARY

Using a collaborative robot (cobot) mounted on a base (e.g., a magnetic base) and running all welding and control lines from an equipment porch to the base, the cobot can be located remotely from the porch and be mounted in any number of positions (e.g., vertical or horizontal). The cobot uses a "smart" torch or welding gun which aids in easily programming the cobot to perform a welding operation at the remote location, especially in confined spaces. In this manner, a user is given flexibility to move the cobot (away from the porch) to remote locations that otherwise cannot be reached except via a human for manual or semi-automatic welding.

For example, in one embodiment, a cobot having a "smart" welding torch can be mounted on a concrete floor in a horizontal position while being lagged to the floor, and while being located remotely from a porch having a welding power source and a robot controller. In another embodiment, a cobot having a "smart" welding torch can be magnetically mounted to a metal surface (to avoid lagging) in a horizontal position or a vertical position, while being located remotely from a porch having a welding power source and a robot controller. The "smart" welding torch enables an operator to safely move the arm of a cobot and create programs by holding a dead man's switch on the "smart" welding torch while recording weld points and arc start/arc end points without holding a teach pendant tablet, in accordance with one embodiment. The cobot becomes more ergo-friendly for the operator to manipulate and program.

One embodiment of the present invention is a welding or cutting torch for use by a collaborative robot. The welding or cutting torch includes a torch body configured to be operatively connected to a moveable arm of the collaborative robot. The torch also includes a first actuator device on the torch body configured to be manually activated by a human user to initiate a recording cycle at a welding or cutting starting point of a desired welding or cutting path, and to terminate the recording cycle at a welding or cutting ending point of the desired welding or cutting path in three-dimensional space. The torch further includes a second actuator device on the torch body configured to be manually activated by the human user to indicate welding or cutting way points at and between the welding or cutting starting point and the welding or cutting ending point in three-dimensional space as the human user manually moves the welding or cutting torch, as connected to the arm of the collaborative robot, along the desired welding or cutting path without actually welding or cutting. The first actuator device is configured to send first data or signals to a robot controller, operatively connected to and located remotely from the collaborative robot, to initiate and to terminate the recording cycle at the robot controller. The second actuator device is configured to send the welding or cutting way points, as indicated along the desired welding or cutting path, as second data or signals to the robot controller to be recorded at the robot controller during the recording cycle without actually welding or cutting. In one embodiment, the torch also includes a third actuator device on the torch body configured to be manually activated by the human user to enable the arm of the collaborative robot, with the welding or cutting torch connected, to be manually moved by the human user in three-dimensional space. In one embodiment, the third actuator device is configured to communicate, in a wired manner, with the robot controller. In another embodiment, the third actuator device is configured to communicate, in a wireless manner, with the robot controller. In one embodiment, the first actuator device is configured to send the first data or signals, in a wired manner, to the robot controller. In another embodiment, the first actuator device is configured to send the first data or signals, in a wireless manner, to the robot controller. In one embodiment, the second actuator device is configured to send the second data or signals, in a wired manner, to the robot controller. In another embodiment, the second actuator device is configured to send the second data or signals, in a wireless manner, to the robot controller. In one embodiment, the welding or cutting torch is one of an arc welding torch or a plasma cutting torch.

One embodiment of the present invention is a system for welding or cutting. The system includes a collaborative robot having a moveable arm and a robot controller operatively connected to the collaborative robot. The system also includes a welding or cutting torch having a torch body configured to be operatively connected to the moveable arm of the collaborative robot. The welding or cutting torch includes a first actuator device on the torch body configured to be manually activated by a human user to initiate a recording cycle at a welding or cutting starting point of a desired welding or cutting path, and to terminate the recording cycle at a welding or cutting ending point of the desired welding or cutting path in three-dimensional space. The welding or cutting torch also includes a second actuator device on the torch body configured to be manually activated by the human user to indicate welding or cutting way points at and between the welding or cutting starting point and the welding or cutting ending point in three-dimensional space as the human user manually moves the welding or cutting torch, as connected to the arm of the collaborative robot, along the desired welding or cutting path without actually welding or cutting. The robot controller is configured to receive first data or signals from the first actuator device to initiate and to terminate the recording cycle. Also, the robot controller is configured to receive and record the welding or cutting way points indicated along the desired welding or cutting path, during the recording cycle, as second data or signals received from the second actuator device without actually welding or cutting. In one embodiment, the system further includes a third actuator device on the torch body configured to be manually placed in and held in an activated position by the human user to enable the arm of the collaborative robot, with the welding or cutting torch connected, to be manually moved by the human user in three-dimensional space, and where the arm cannot be moved when the human user releases the third actuator device. The third actuator device is configured to communicate with the robot controller. In one embodiment, the system also includes a welding or cutting power supply operatively connected to the welding or cutting torch. In one embodiment, the system further includes an equipment porch located away from the collaborative robot, where the robot controller and the welding or cutting power supply are located on the equipment porch. In one embodiment, the welding or cutting torch is an arc welding torch and, in another embodiment, the welding or cutting torch is a plasma cutting torch. In one embodiment, the robot controller is programmed to automatically control the collaborative robot to make an actual weld or an actual cut along the desired welding or cutting path, as defined by the way points, using the welding or cutting torch. In accordance with various embodiments, the collaborative robot is configured to be mounted to a concrete floor via lag bolts, or to be mounted to a metal surface via a magnetic base. In one embodiment, the collaborative robot is configured to be enclosed in a lifting frame and be lifted by a forklift or a crane.

Numerous aspects of the general inventive concepts will become readily apparent from the following detailed description of exemplary embodiments, from the claims, and from the accompanying drawings.

### BRIEF DESCRIPTION OF THE DRAWINGS

The accompanying drawings, which are incorporated in and constitute a part of the specification, illustrate various embodiments of the disclosure. It will be appreciated that the illustrated element boundaries (e.g., boxes, groups of boxes, or other shapes) in the figures represent one embodiment of boundaries. In some embodiments, one element may be designed as multiple elements or multiple elements may be designed as one element. In some embodiments, an element shown as an internal component of another element may be implemented as an external component and vice versa. Furthermore, elements may not be drawn to scale.
- FIG. 1: illustrates one embodiment of a welding system having a collaborative robot located remotely from an equipment porch having a welding power supply and a robot controller;
- FIG. 2A: illustrates one embodiment of the welding system of FIG. 1 having the collaborative robot on a base configured to be mounted to a concrete floor via lag bolts;
- FIG. 2B: illustrates one embodiment of the welding system of FIG. 1 having the collaborative robot configured to be mounted to a metal surface via a magnetic base;
- FIG. 2C: illustrates one embodiment of the welding system of FIG. 1 showing the collaborative robot configured to be enclosed in a lifting frame to be lifted (e.g., by a forklift or a crane);
- FIG. 3: illustrates one embodiment of a "smart" welding torch configured to be employed by (or as part of) a collaborative robot;
- FIG. 4: illustrates a first view of one embodiment of a "smart" welding torch configured to be used by a collaborative robot;
- FIG. 5: illustrates a second view of the embodiment of the "smart" welding torch of FIG. 4;
- FIG. 6: illustrates another embodiment of a "smart" welding torch configured to be used by a collaborative robot;
- FIG. 7: illustrates yet another embodiment of a "smart" welding torch configured to be used by a collaborative robot;
- FIG. 8: illustrates a blown up view of a portion of the "smart" welding torch of FIG. 7 corresponding to the body of the welding torch; and
- FIG. 9: illustrates a block diagram of an example embodiment of a controller that can be used, for example, in the welding system of FIG. 1.

### DETAILED DESCRIPTION

Embodiments of the present invention may include a "smart" welding torch that attaches to the arm of a collaborative robot and which can be moved along a desired welding path to program the desired welding path into a controller of the collaborative robot via actuators on the "smart" welding torch. In an alternative embodiment, the torch can be a "smart" cutting torch for performing cutting operations instead of welding operations. In one embodiment, the collaborative robot is mounted remotely from an equipment porch having a welding power supply and a robot controller. With a collaborative robot, there is no need for additional safety features such as physical guarding which are used with conventional robots. The collaborative robot, being mounted remotely, will use cables as umbilical cords to enable flexibility of the collaborative robot and to be detached from the porch having the welding power equipment and the robot controller. Protective sleeves may be used to protect the cables from being damaged on, for example, rough terrain. In one embodiment, magnetics may be used to mount the collaborative robot at the remote location in any desired position (e.g., horizontal, vertical, diagonal). In one embodiment, a collaborative robot can be picked up and transported using either, for example, a forklift or a crane.

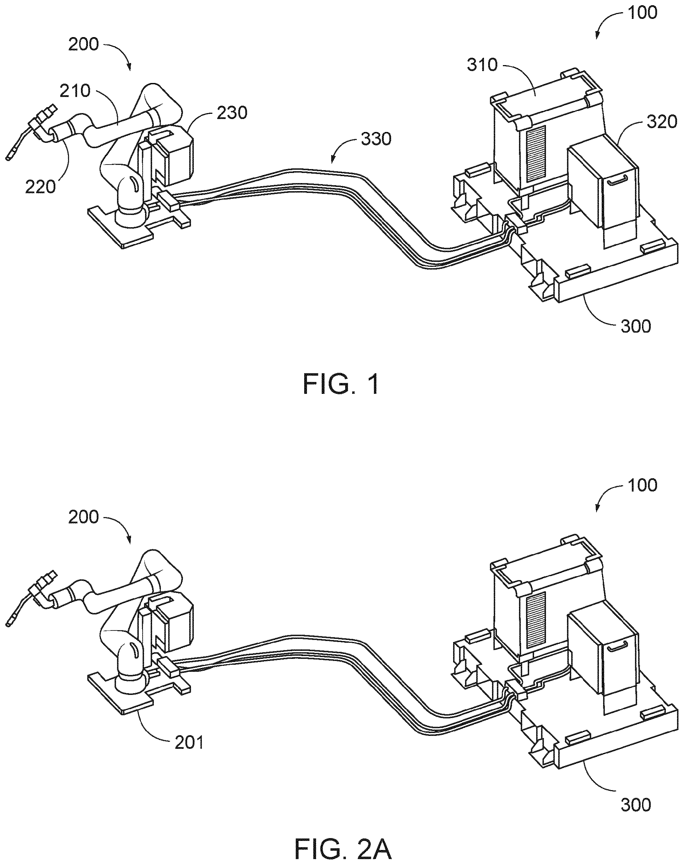

The examples and figures herein are illustrative only and are not meant to limit the subj ect invention, which is measured by the scope and spirit of the claims. Referring now to the drawings, wherein the showings are for the purpose of illustrating exemplary embodiments of the subject invention only and not for the purpose of limiting same, FIG. 1 illustrates one embodiment of a welding system 100. Even though most examples herein refer to welding systems, the novel aspects disclosed herein apply equally well to cutting systems (e.g., plasma cutting systems) for cutting metal work pieces.

Referring to FIG. 1, the welding system 100 includes a collaborative robot (cobot) 200 located remotely from an equipment porch 300. A collaborative robot allows for direct user interaction and contact with the cobot within a shared area. In this manner, the collaborative robot and the user can work closely together. The equipment porch 300 has a welding power supply 310 (e.g., an inverterbased power supply), supporting arc welding, and a robot controller 320 situated thereon. In accordance with another embodiment, the power supply may be a cutting power supply supporting plasma cutting. Again, the equipment porch 300 is located away from the collaborative robot 200. That is, the equipment porch 300 and the collaborative robot 200 are separated from each other by multiple feet (e.g., 10 to 100 feet).

The collaborative robot 200 has a moveable arm 210 configured to hold (via attachment) a "smart" welding torch (aka, a "smart" welding gun) 220. The terms "torch" and "gun" are used herein interchangeably. The term "smart" is used herein to refer to certain programmable capabilities provided by the welding torch/gun 220 which are supported by the robot controller 320. The welding power supply 310 may be operatively connected, directly or indirectly (e.g., through a wire feeder), to the welding torch 220 via, for example, welding and/or control cables. The collaborative robot 200 may be operatively connected to the robot controller via, for example, robot cables (e.g., control and communications cables).

The collaborative robot 200 also includes a servo-mechanism apparatus 230 configured to move the arm 210 of the collaborative robot 200 under the command of the robot controller 320 (e.g., to support movement over multiple degrees of freedom). In accordance with one embodiment, cables 330 (e.g., welding power/control/communication cables and robot power/control/communication cables) run between the equipment porch 300 and the remote location of the collaborative robot 220 to support arc welding and robot control. In one embodiment, the collaborative robot 200 includes a wire feeder (not shown) to feed welding wire to the "smart" welding torch 220. In another embodiment, the equipment porch 300 includes a wire feeder (not shown) to feed welding wire to the "smart" welding torch 220.

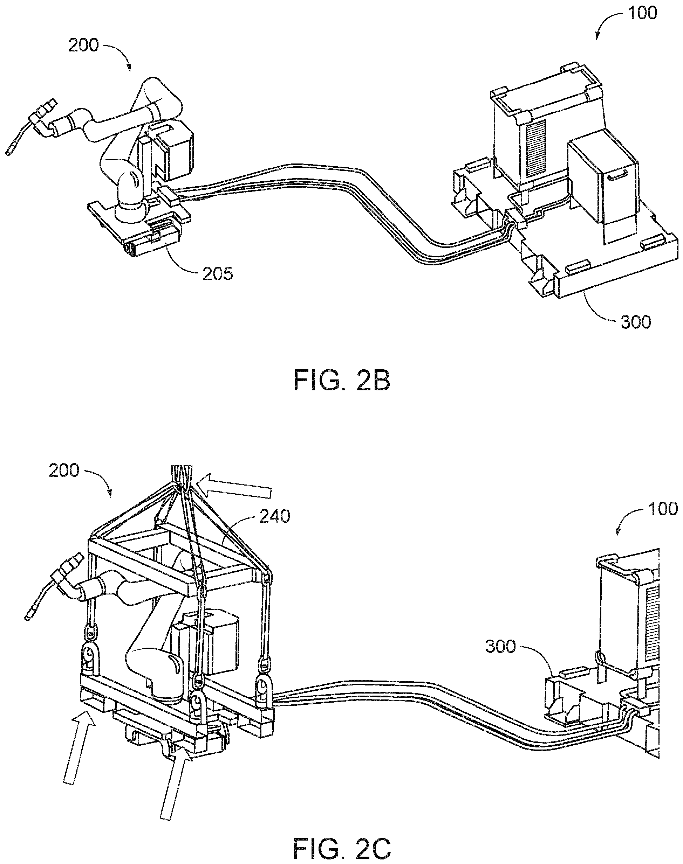

FIG. 2A illustrates one embodiment of the welding system 100 of FIG. 1 having the collaborative robot 200 on a base 201 configured to be mounted to a concrete floor via, for example, lag bolts. FIG. 2B illustrates one embodiment of the welding system 100 of FIG. 1 having the collaborative robot 200 configured to be mounted to a metal surface via a magnetic base 205. FIG. 2C illustrates one embodiment of the welding system 100 of FIG. 1 showing the collaborative robot 200 configured to be enclosed in a lifting frame 240 to be lifted (e.g., by a forklift or a crane). It may be desirable to lift the collaborative robot 200 to help put the robot in a particular position for welding a work piece.

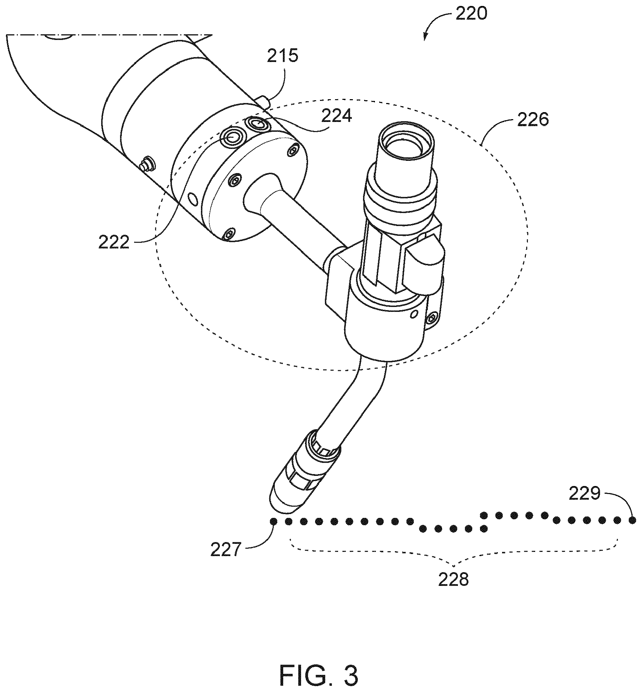

FIG. 3 illustrates one embodiment of a "smart" welding torch 220 configured to be employed by (or as part of) the collaborative robot 200. In accordance with another embodiment, the torch may be a "smart" plasma cutting torch. The "smart" welding torch 220 is configured to be operatively connected to (attached to) the arm 210 of the collaborative robot 200, in one embodiment. Such an attachment may take one of many possible forms, in accordance with sound engineering judgment. For example, a quick connect/disconnect attachment means may be provided as facilitated by pressing and releasing a quick connect/disconnect button 215 on the arm 210 of the robot 200. In another embodiment, the torch 220 is configured as an integral part of the moveable arm 210. In accordance with an alternative embodiment of the present invention, the quick connect/disconnect button 215 may be located on the body 226 of the torch 200, instead of on the arm 210 of the robot 200. Such an alternative embodiment results in a connecting configuration where certain connection aspects are incorporated into the torch 200 instead of the arm 210.

The "smart" welding torch 220 includes a first actuator device 222 (e.g., a momentary push-button device) and a second actuator device 224 (e.g., a momentary push-button device). The first actuator device 222 and the second actuator device 224 are each on the torch body 226 (which is the portion of the torch illustrated as being substantially within the dashed oval in FIG. 3). The first actuator device 222 is configured to be manually activated by a human user to initiate a recording cycle at a weld starting point 227 and to terminate the recording cycle at a weld ending point 229 in three-dimensional space. The recording cycle corresponds to the time over which welding way points are recorded by the controller 320, as explained further herein. The weld is to be made along the desired welding path (e.g., along a work piece) by the collaborative robot 200 using the welding torch 220 from the weld starting point 227 to the weld ending point 229. In accordance with one embodiment, the first time the first actuator device 222 is pressed by the user, the recording cycle is started. The second time the first actuator device 222 is pressed by the user, the recording cycle is ended.

The second actuator device 224 on the torch body 226 is configured to be manually activated by the human user to initiate recording of weld points (e.g., welding way points) in three-dimensional space along the desired welding path, including the weld starting point 227, the intermediate weld points 228, and the weld ending point 229 as illustrated in FIG. 3. During a recording cycle, each time the second actuator device 224 is pressed by the user, a weld point (a welding way point) is recorded by the robot controller 320 as a point in three-dimensional space. In this manner, when the "smart" welding torch 220 is manually moved by the human user along the desired welding path (before actual welding occurs) and the user activates the actuator devices 222 and 224 (to initiate a recording cycle, record the weld points (227, 228, and 229), and terminate the recording cycle), the welding way points (representing the desired welding path) are recorded at the robot controller 320.

The robot controller 320 receives first data or signals (e.g., first information in digital and/or analog form) from the first actuator device 222, and receives second data or signals (e.g., second information in digital and/or analog form) from the second actuator device 224. The data and/or signals represent at least control signals and the welding way points that get recorded. Communication between the robot controller 320 and the actuator devices 222 and 224 may be via wireless means (e.g., Bluetooth^{®} or WiFi based on IEEE 802.11 standards), or via wired means (e.g., control/communication cables supporting one or more wired communication protocols between the robot controller 320 and the welding torch 220 as operatively connected to the collaborative robot 200), in accordance with various embodiments. Again, in accordance with one embodiment, the robot controller 320 is located remotely from (away from) the collaborative robot 200 (e.g., at least 10 feet away from each other).

In accordance with one embodiment, the first actuator device 222 and the second actuator device 224 each include a light emitting diode. When an actuator device 222 or 224 is pressed, the corresponding light emitting diode emits a flashing green color. When an actuator device 222 or 224 is released, the corresponding light emitting diode emits a constant (non-flashing) green color. The actuator devices may be momentary push-button devices, switches, or other types of actuator devices, in accordance with various embodiments.

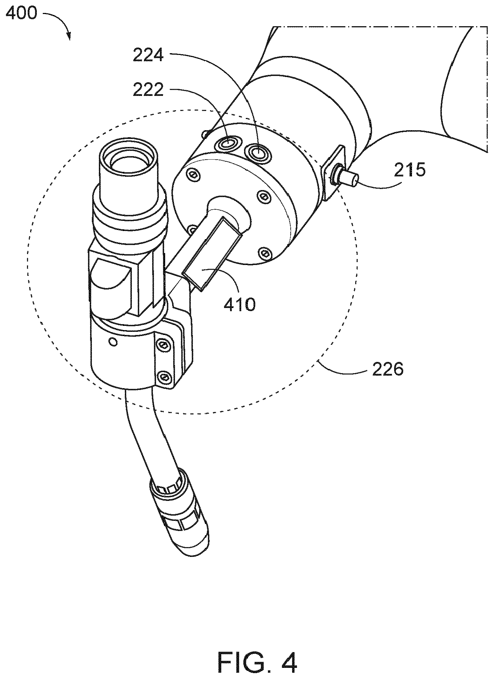

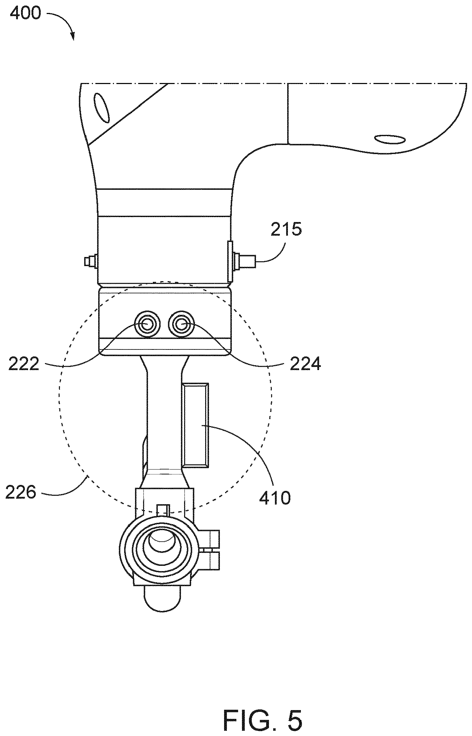

FIG. 4 illustrates a first view of one embodiment of a "smart" welding torch 400 configured to be used by a collaborative robot 200. FIG. 5 illustrates a second view of the embodiment of the "smart" welding torch 400 of FIG. 4. The "smart" welding torch 400 is similar to the "smart" welding torch 220 of FIG. 3 and operates in a similar manner with respect to the first actuator device 222 and the second actuator device 224. However, the "smart" welding torch 400 also includes a third actuator device 410 (e.g., configured as a dead man's switch). The third actuator device 410 is also on the torch body 226 (the portion of the torch illustrated as being substantially within the dashed oval in FIG. 4 and FIG. 5).

The third actuator device 410 is configured to be activated by a human user (e.g., manually placed in and held down in an activated position) to enable the arm 210 of the collaborative robot 200, with the "smart" welding torch 400 connected, to be moved by the human user along a desired welding path along which a weld is to be subsequently made by the collaborative robot 200 (e.g., the arm is unlocked). When the user releases the third actuator device 410, the robot arm 210 cannot be moved by the user (e.g., the arm is locked). The "smart" welding torch 400 allows the user to safely and manually move the arm 210 of the robot 200 to help create welding path programs, via the recording of welding way points, before welding occurs.

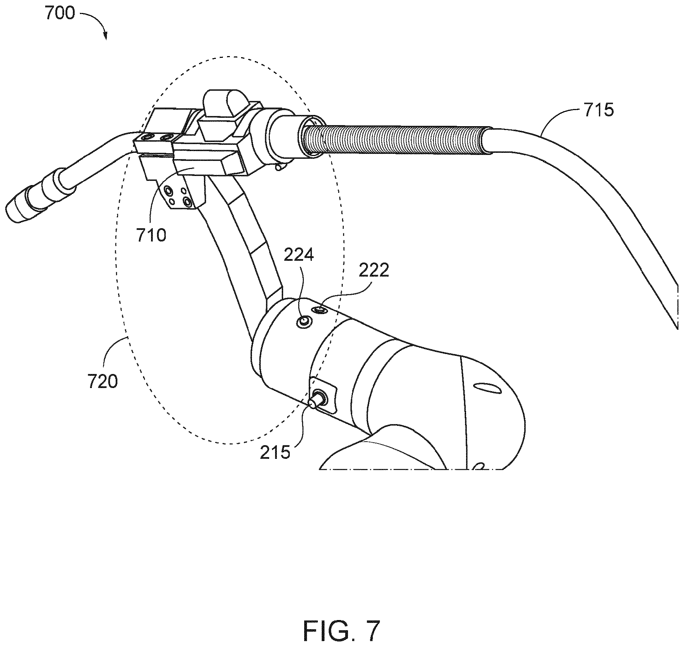

The user holds down the third actuator device 410 to move the arm 210 while establishing arc start/arc end locations (to initiate a recording cycle and to terminate the recording cycle using the first actuator device 222) and while recording weld points (using the second actuator device 224). For example, the user may use his one hand to hold down the kill switch actuator device 410, and use his other hand to manipulate the other two actuator devices 222 and 224. In this manner, a user does not need to hold a teach pendant tablet, resulting in a more ergonomically friendly experience for the user. The first, second, and third actuator devices 222, 224, and 410 communicate either directly or indirectly (e.g., via wired and/or wireless means) with the robot controller 320 to accomplish the functionality described herein. For example, indirect communication may be through wiring and/or circuitry within the robot 200 itself (i.e., from the torch to the robot to the controller). Direct communication may be, for example, through cables (e.g., see the cables 715 in Fig. 7) directly between the torch and the robot controller 320. The robot controller 320 is programmed to automatically control the collaborative robot 200 to make an actual weld along the desired welding path, as defined by the recorded welding way points, using the welding torch 400.

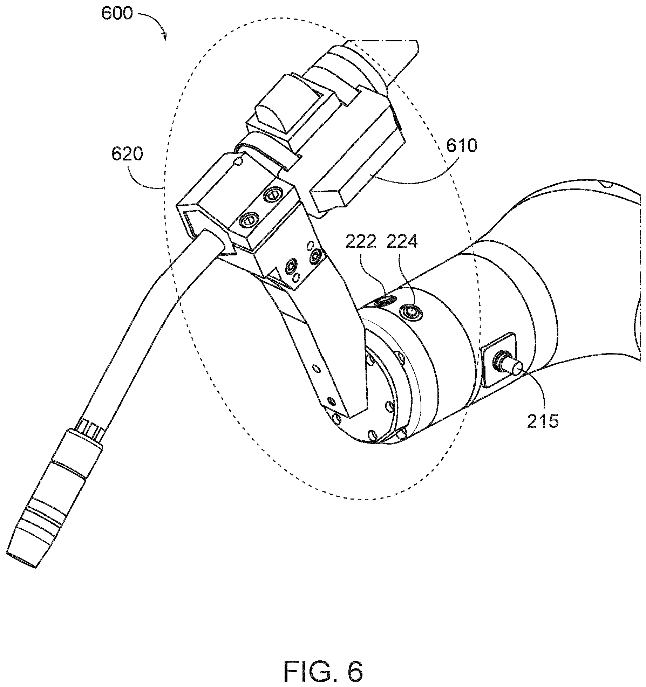

FIG. 6 illustrates another embodiment of a "smart" welding torch 600 configured to be used by a collaborative robot 200. The "smart" welding torch 600 operates in a similar manner to the "smart" welding torch 400 of FIG. 4 and FIG. 5 with actuator devices 222 and 224. However, the "smart" welding torch 600 has a body 620 (the portion of the torch illustrated as being substantially within the dashed oval in FIG. 6) that is configured differently from the body 226 of the previous figures. Also, the welding torch 600 has a third actuator device 610 (a dead man's switch) in a different location on the body 620 of the torch 600 from that of the "smart" welding torch 400 of FIG. 4. The third actuator device 610 operates in a similar manner to the third actuator device 410 of FIG. 4 and FIG. 5.

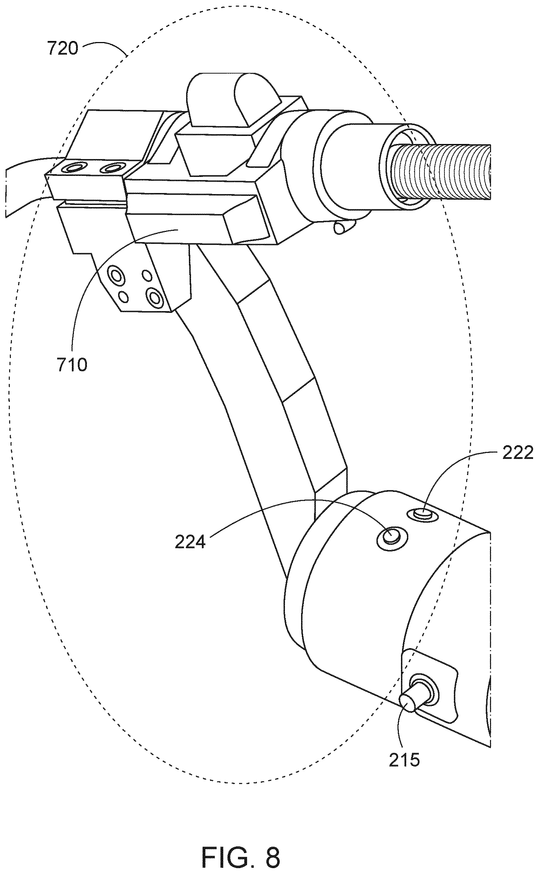

FIG. 7 illustrates yet another embodiment of a "smart" welding torch 700 configured to be used by a collaborative robot 200. The "smart" welding torch 700 operates in a similar manner to the "smart" welding torch 600 of FIG. 6 with actuators. However, the "smart" welding torch 700 has a body 720 (the portion of the torch illustrated as being substantially within the dashed oval in FIG. 7) that is configured slightly differently from the body 620 of FIG. 6. The welding torch 700 also has a third actuator device 710 (a dead man's switch) on the body 720 that looks very similar to the third actuator device 610 on the body 620 in FIG. 6. To get a better view of the actuator devices 222, 224, and 710 on the body 720 of FIG. 7, FIG. 8 illustrates a blown up view of a portion of the "smart" welding torch 700 of FIG. 7 corresponding to the body 720.

Other configurations of the first, second, and third actuator devices on a "smart" welding torch are possible as well, in accordance with other embodiments. Such configurations may be dependent on the ergonomic considerations for particular scenarios or applications.

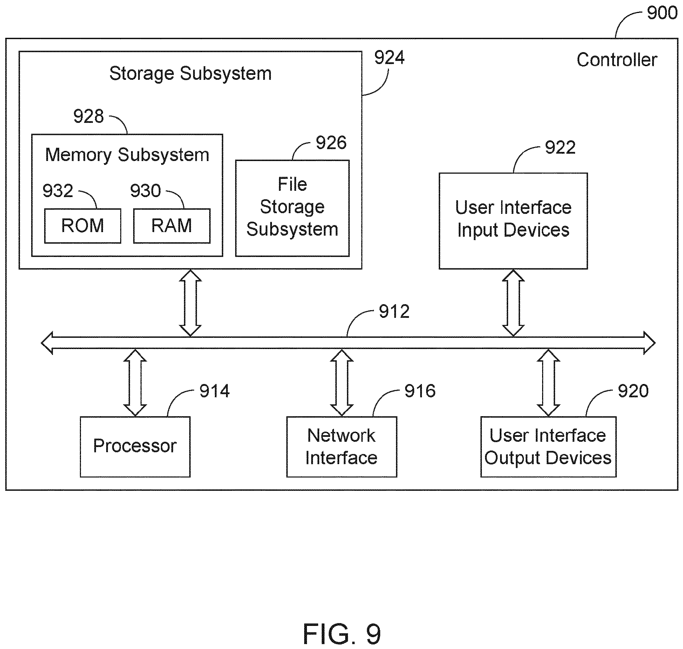

FIG. 9 illustrates a block diagram of an example embodiment of a controller 900 that can be used, for example, in the welding system 100 of FIG. 1. For example, the controller 900 may be used as the robot controller 320 and/or as a controller in the welding power supply 310. Referring to FIG. 9, the controller 900 includes at least one processor 914 (e.g., a microprocessor, a central processing unit, a graphics processing unit) which communicates with a number of peripheral devices via bus subsystem 912. These peripheral devices may include a storage subsystem 924, including, for example, a memory subsystem 928 and a file storage subsystem 926, user interface input devices 922, user interface output devices 920, and a network interface subsystem 916. The input and output devices allow user interaction with the controller 900. Network interface subsystem 916 provides an interface to outside networks and is coupled to corresponding interface devices in other devices.

User interface input devices 922 may include a keyboard, pointing devices such as a mouse, trackball, touchpad, or graphics tablet, a scanner, a touchscreen incorporated into the display, audio input devices such as voice recognition systems, microphones, and/or other types of input devices. In general, use of the term "input device" is intended to include all possible types of devices and ways to input information into the controller 900 or onto a communication network.

User interface output devices 920 may include a display subsystem, a printer, or non-visual displays such as audio output devices. The display subsystem may include a cathode ray tube (CRT), a flat-panel device such as a liquid crystal display (LCD), a projection device, or some other mechanism for creating a visible image. The display subsystem may also provide non-visual display such as via audio output devices. In general, use of the term "output device" is intended to include all possible types of devices and ways to output information from the controller 900 to the user or to another machine or computer system.

Storage subsystem 924 stores programming and data constructs that provide some or all of the functionality described herein. For example, computer-executable instructions and data are generally executed by processor 914 alone or in combination with other processors. Memory 928 used in the storage subsystem 924 can include a number of memories including a main random access memory (RAM) 930 for storage of instructions and data during program execution and a read only memory (ROM) 932 in which fixed instructions are stored. A file storage subsystem 926 can provide persistent storage for program and data files, and may include a hard disk drive, a solid state drive, a floppy disk drive along with associated removable media, a CD-ROM drive, an optical drive, or removable media cartridges. The computer-executable instructions and data implementing the functionality of certain embodiments may be stored by file storage subsystem 926 and memory subsystem 928 in the storage subsystem 924, or in other machines accessible by the processor(s) 914. For example, in one embodiment, the welding waypoints (that are generated when the human user operates the actuators of the welding torch on the end of the arm of the robot as the user moves the welding torch along a desired welding path) are communicated to the controller 900 and stored in the RAM 930 of the memory subsystem 928 of the storage subsystem 924. The welding way points are used by the controller 900 to form a welding program to control the robot to automatically move the welding torch along the desired welding path.

Bus subsystem 912 provides a mechanism for letting the various components and subsystems of the controller 900 communicate with each other as intended. Although bus subsystem 912 is shown schematically as a single bus, alternative embodiments of the bus subsystem may use multiple buses.

The controller 900 can be of varying types. Due to the ever-changing nature of computing devices and networks, the description of the controller 900 depicted in FIG. 9 is intended only as a specific example for purposes of illustrating some embodiments. Many other configurations of a controller are possible, having more or fewer components than the controller 900 depicted in FIG. 9.

While the disclosed embodiments have been illustrated and described in considerable detail, it is not the intention to restrict or in any way limit the scope of the appended claims to such detail. It is, of course, not possible to describe every conceivable combination of components or methodologies for purposes of describing the various aspects of the subject matter. Therefore, the disclosure is not limited to the specific details or illustrative examples shown and described. Thus, this disclosure is intended to embrace alterations, modifications, and variations that fall within the scope of the appended claims, which satisfy the statutory subject matter requirements of 35 U.S.C. §101. The above description of specific embodiments has been given by way of example. From the disclosure given, those skilled in the art will not only understand the general inventive concepts and attendant advantages, but will also find apparent various changes and modifications to the structures and methods disclosed. It is sought, therefore, to cover all such changes and modifications as fall within the spirit and scope of the general inventive concepts, as defined by the appended claims, and equivalents thereof.

## Claims

1. A welding or cutting torch for use by a collaborative robot, the welding or cutting torch comprising:
- a torch body configured to be operatively connected to a moveable arm of the collaborative robot;
- a first actuator device on the torch body configured to be manually activated by a human user to initiate a recording cycle at a welding or cutting starting point of a desired welding or cutting path, and to terminate the recording cycle at a welding or cutting ending point of the desired welding or cutting path in three-dimensional space; and
- a second actuator device on the torch body configured to be manually activated by the human user to indicate welding or cutting way points at and between the welding or cutting starting point and the welding or cutting ending point in three-dimensional space as the human user manually moves the welding or cutting torch, as connected to the arm of the collaborative robot, along the desired welding or cutting path without actually welding or cutting,
wherein the first actuator device is configured to send first data or signals to a robot controller, operatively connected to and located remotely from the collaborative robot, to initiate and to terminate the recording cycle at the robot controller, and
wherein the second actuator device is configured to send the welding or cutting way points, as indicated along the desired welding or cutting path, as second data or signals to the robot controller to be recorded at the robot controller during the recording cycle without actually welding or cutting.

2. The welding or cutting torch of claim 1, wherein the first actuator device is configured to send the first data or signals, in a wired and/or wireless manner, to the robot controller

3. The welding or cutting torch of claim 1 or 2, wherein the second actuator device is configured to send the second data or signals, in a wired and/or wireless manner, to the robot controller.

4. The welding or cutting torch of any of the preceding claims, further comprising a third actuator device on the torch body configured to be manually activated by the human user to enable the arm of the collaborative robot, with the welding or cutting torch connected, to be manually moved by the human user in three-dimensional space.

5. The welding or cutting torch of claim 4, wherein the third actuator device is configured to communicate, in a wired and/or wireless manner, with the robot controller.

6. The welding or cutting torch of any of the previous claims, wherein the welding or cutting torch is one of an arc welding torch or a plasma cutting torch.

7. A system for welding or cutting, the system comprising:
- a collaborative robot having a moveable arm;
- a robot controller operatively connected to the collaborative robot; and
- a welding or cutting torch having a torch body configured to be operatively connected to the moveable arm of the collaborative robot;
wherein the welding or cutting torch includes:
- a first actuator device on the torch body configured to be manually activated by a human user to initiate a recording cycle at a welding or cutting starting point of a desired welding or cutting path, and to terminate the recording cycle at a welding or cutting ending point of the desired welding or cutting path in three-dimensional space; and
- a second actuator device on the torch body configured to be manually activated by the human user to indicate welding or cutting way points at and between the welding or cutting starting point and the welding or cutting ending point in three-dimensional space as the human user manually moves the welding or cutting torch, as connected to the arm of the collaborative robot, along the desired welding or cutting path without actually welding or cutting,
wherein the robot controller is configured to receive first data or signals from the first actuator device to initiate and to terminate the recording cycle, and
wherein the robot controller is configured to receive and record the welding or cutting way points indicated along the desired welding or cutting path, during the recording cycle, as second data or signals received from the second actuator device without actually welding or cutting.

8. The system of claim 7, further comprising a third actuator device on the torch body configured to be manually placed in and held in an activated position by the human user to enable the arm of the collaborative robot, with the welding or cutting torch connected, to be manually moved by the human user in three-dimensional space, and wherein the arm cannot be moved when the human user releases the third actuator device.

9. The system of claim 8, wherein the third actuator device is configured to communicate, preferably wired and/or wirelessly, with the robot controller.

10. The system of any of the claims 7-9, further comprising a welding or cutting power supply operatively connected to the welding or cutting torch.

11. The system of any of the claims 7-10, further comprising an equipment porch located away from the collaborative robot, wherein the robot controller and the welding or cutting power supply are located on the equipment porch.

12. The system of any of the claims 7-11, wherein the welding or cutting torch is an arc welding torch or a plasma cutting torch.

13. The system of any of the claims 7-12, wherein the robot controller is programmed to automatically control the collaborative robot to make an actual weld or an actual cut along the desired welding or cutting path, as defined by the way points, using the welding or cutting torch.

14. The system of any of the claims 7-13, wherein the collaborative robot is configured to be mounted to a concrete floor via lag bolts or is configured to be mounted to a metal surface via a magnetic base.

15. The system of any of the claims 7-13, wherein the collaborative robot is configured to be enclosed in a lifting frame and be lifted by a forklift or a crane.
